(19) **Europäisches Patentamt**
**European Patent Office**
**Office européen des brevets**

(11) **EP 2 351 373 B1**

(12) **FASCICULE DE BREVET EUROPEEN**

(45) Date de publication et mention
de la délivrance du brevet:
**04.07.2018 Bulletin 2018/27**

(21) Numéro de dépôt: **09756008.0**

(22) Date de dépôt: **12.10.2009**

(51) Int Cl.:
*H04N 19/11* [(2014.01)]     *H04N 19/109* [(2014.01)]
*H04N 19/176* [(2014.01)]     *H04N 19/136* [(2014.01)]
*H04N 19/61* [(2014.01)]     *H04N 19/124* [(2014.01)]
*H04N 19/523* [(2014.01)]

(86) Numéro de dépôt international:
**PCT/FR2009/051937**

(87) Numéro de publication internationale:
**WO 2010/043806 (22.04.2010 Gazette 2010/16)**

(54) **CODAGE ET DECODAGE AVEC ELIMINATION D'UN OU PLUSIEURS PREDICTEURS PREDETERMINES**

KODIERUNG UND DEKODIERUNG MIT ELIMINIERUNG VON EINEM ODER MEHREREN PRÄDIKTOREN

ENCODING AND DECODING WITH ELIMINATION OF ONE OR MORE PREDETERMINED PREDICTORS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **14.10.2008 FR 0856949**

(43) Date de publication de la demande:
**03.08.2011 Bulletin 2011/31**

(73) Titulaire: **Orange**
**75015 Paris (FR)**

(72) Inventeurs:
• **LAROCHE, Guillaume**
**F-35700 Rennes (FR)**
• **JUNG, Joël**
**F-78320 Le Mesnil Saint Denis (FR)**

(56) Documents cités:
**EP-A- 1 770 639     US-A1- 2006 120 456**

• **LING-JIAO PAN ET AL: "A Fast Mode Decision Algorithm for H.264/AVC Intra Prediction" SIGNAL PROCESSING SYSTEMS, 2007 IEEE WORKSHOP ON, IEEE, PI, 1 octobre 2007 (2007-10-01), pages 704-709, XP031164050 ISBN: 978-1-4244-1221-1**
• **PAN F ET AL: "A directional field based fast intra mode decision algorithm for H.264 video coding" MULTIMEDIA AND EXPO, 2004. ICME '04. 2004 IEEE INTERNATIONAL CONFERENCE ON, IEEE, PISCATAWAY, NJ, USA, vol. 2, 27 juin 2004 (2004-06-27), pages 1147-1150, XP010771027 ISBN: 978-0-7803-8603-7**

## Description

Arrière-plan de l'invention

La présente invention se rapporte de manière générale au domaine du traitement d'images, et plus précisément au codage et au décodage par compétition d'images numériques et de séquences d'images numériques.

Plusieurs procédés de codage et de décodage existent pour la transmission d'images. On distingue notamment des grands types de codage tels que le codage dit "intra" où une image est codée de manière autonome, c'est-à-dire sans référence à d'autres images, ou encore le codage dit "inter" qui consiste à coder une image courante par rapport à des images passées de manière à exprimer et ne transmettre que la différence entre ces images.

Les procédés de codage du type précité comprennent généralement une étape de codage prédictif selon laquelle des groupes de pixels, appelés blocs ou macroblocs, d'une image courante sont prédits par rapport à d'autres blocs ou macroblocs de référence, c'est-à-dire précédemment codés puis décodés.

Dans le cas par exemple de la norme H264/MPEG-4 AVC (d'après l'anglais "Advanced Video Coding"), le codage prédictif d'un macrobloc consiste à découper les macroblocs selon une pluralité de partitions ayant généralement la forme de blocs de plus petite taille.

Dans le cas du codage Intra 16x16, le macrobloc est considéré comme une unique partition qui est prédite par rapport à un ensemble de quatre prédicteurs spatiaux. Dans le cas du codage Intra 8x8 ou 4x4, chaque bloc de plus petite taille est prédit par rapport à un ensemble de neuf prédicteurs spatiaux comprenant les quatre prédicteurs spatiaux utilisés dans le codage Intra 16x16.

Dans le cas du codage inter, le macrobloc peut être partitionné selon les modes 16x16, 8x16, 16x8 et 8x8. Si le mode 8x8 est sélectionné, chaque bloc 8x8 est à nouveau partitionné selon les modes 8x8, 4x8, 8x4 et 4x4. Chaque bloc courant est comparé à un ou plusieurs blocs d'une ou de plusieurs images de référence. Un prédicteur temporel est alors défini par un vecteur qui décrit le mouvement entre le bloc courant et le bloc de référence. Si par exemple un macrobloc est partitionné en 16 blocs (mode 4x4), 24 vecteurs de déplacement vont être codés. Un tel codage inter peut par ailleurs être affiné en fractionnant le vecteur de déplacement afin d'atteindre une précision qui, au-delà du pixel entier, peut s'étendre au demi-pixel, au quart de pixel, voire au huitième de pixel.

Le codage intra ou inter par compétition, tel que mis en oeuvre dans la norme H264/AVC, repose ainsi sur la mise en compétition des différents prédicteurs précités, qu'ils soient de type spatiaux ou temporels, dans le but de sélectionner le meilleur prédicteur, c'est-à-dire le prédicteur qui optimisera le codage du bloc considéré selon un critère prédéterminé, par exemple le coût débit/distorsion.

Un inconvénient d'un tel codage prédictif réside dans le nombre important de prédicteurs proposés et il a été constaté que certains codages mis en compétition sont très similaires pour certains contenus de l'image et certains débits utilisés, ce qui augmente inutilement le débit de l'information de compétition induit par ces multiples prédicteurs.

Un autre inconvénient d'un tel codage prédictif, réside dans le fait que le calcul d'un critère de sélection, tel que le coût débit/distorsion, est effectué pour l'ensemble des prédicteurs et est donc très consommateur en termes de puissance de calcul et de temps de traitement de l'unité centrale.

La demande de brevet US20060120456 déposée le 8 juin 2006 propose un procédé permettant d'améliorer l'efficacité de codage en éliminant des prédicteurs d'un ensemble de prédicteurs.

Le document intitulé "A fast Mode decision Algorithm for H264/AVC Intra Prédiction", SIGNAL PROCESSING SYSTEMS ; 2007 IEEE WORKSHOP, LING-JIAO PAN ET AL, propose une méthode visant à réduire la complexité du codage en éliminant certains prédicteur d'un ensemble de prédicteurs.

Le document "A directional field based fast intra mode decision algorithm for H264 video coding", 2004 IEEE International Conference, PAN ET AL: propose une autre méthode d'élimination de certains prédicteurs.

La demande de brevet européen EP 1 770 639 propose encore une autre méthode d'élimination de certains prédicteurs.

Objet et résumé de l'invention

Un des buts de l'invention est de remédier à des inconvénients de l'état de la technique précité.

A cet effet, un objet de la présente invention concerne un procédé de codage, un procédé de décodage, un dispositif de codage, un dispositif de décodage et un programme d'ordinateur selon les revendications. Une telle disposition permet donc d'utiliser moins de prédicteurs pour le codage des blocs et de réduire ainsi de façon satisfaisante le débit de l'information de compétition précitée.

Par ailleurs, une telle disposition permet avantageusement de définir un critère d'élimination optimal de prédicteurs qui ne dépend pas de l'image originale à coder. Par conséquent, un tel critère d'élimination, lorsqu'il est adopté au niveau du codeur, est reproductible au niveau du décodeur. Une telle disposition permet enfin, grâce à l'élimination d'un ou de plusieurs prédicteurs prédéterminés, d'obtenir un codage adapté au contenu des prédicteurs et aux différents contenus de l'image.

Brève description des dessins

D'autres caractéristiques et avantages apparaîtront à la lecture de deux modes de réalisation préférés décrits en référence aux figures dans lesquelles:

- la figure 1 représente des étapes du procédé de codage selon l'invention,
- la figure 2 représente un mode de réalisation d'un dispositif de codage selon l'invention,
- la figure 3 représente différentes formes de partitions susceptibles d'êtres sélectionnées dans le dispositif de codage selon l'invention,
- la figure 4 représente des macroblocs partitionnés suite à la sélection des différentes partitions initiales représentées à la figure 3,
- la figure 5 représente les prédicteurs spatiaux utilisés dans le cas du mode de codage intra de la figure 3A,
- la figure 6 représente un critère d'optimisation du nombre de prédicteurs à éliminer,
- la figure 7 représente un dispositif de décodage selon l'invention,
- la figure 8 représente des étapes du procédé de décodage selon l'invention,
- la figure 9 représente les prédicteurs temporels utilisés dans le cas du codage inter 4x4, avec résolution au demi-pixel.

Description détaillée d'un premier mode de réalisation

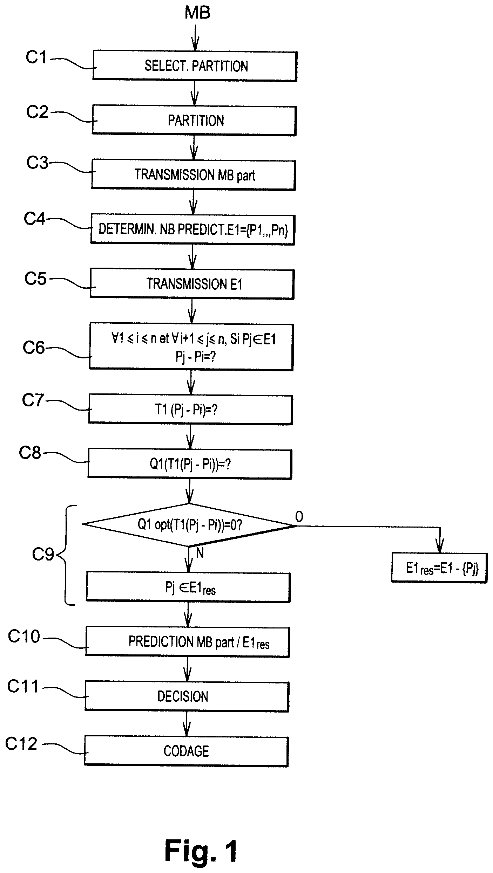

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C12, représentées à la **figure 1.**

Il est à noter que le procédé de décodage selon l'invention est également implémenté de manière logicielle ou matérielle par modifications d'un décodeur initialement conforme à la norme H.264/MPEG-4 AVC.

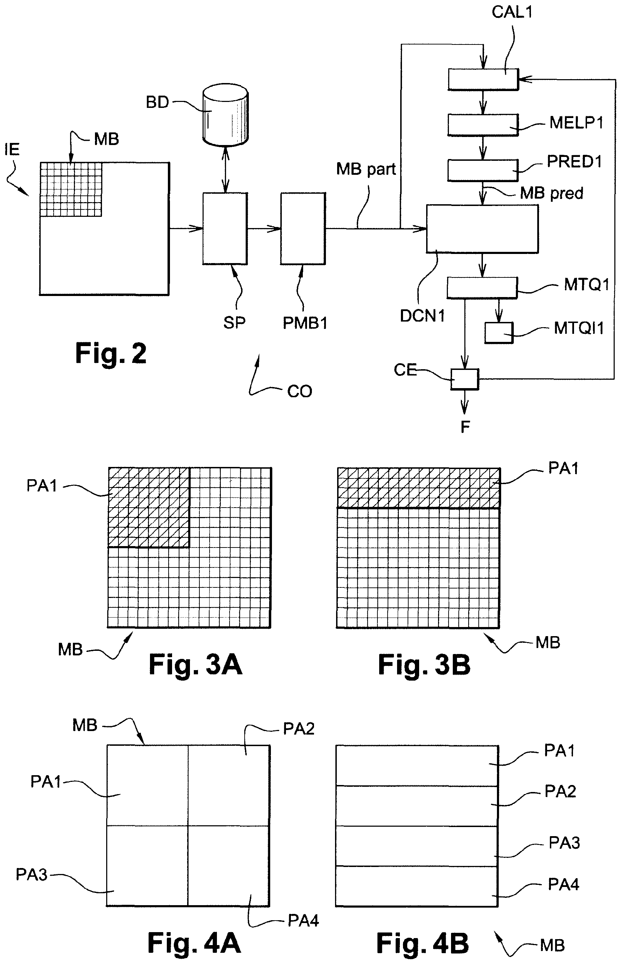

Selon le mode de réalisation de l'invention, le procédé de codage selon l'invention est implémenté dans un dispositif de codage CO représenté à la **figure 2.** Le codage effectué par le codeur CO est par exemple de type Intra.

La première étape C1, représentée à la **figure 1,** est la sélection, pour un macrobloc appartenant à une image IE de la séquence d'images à coder, d'une partition particulière plus petite choisie dans un ensemble prédéterminé de partitions de forme prédéterminée. Pour cela, un macrobloc MB appartenant à l'image IE, par exemple de taille 16x16, est appliqué en entrée d'un module SP de sélection de partitions, représenté à la **figure 2.**

Ce module SP de sélection de partitions utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998). Elles ne seront donc pas décrites plus avant.

Lesdites partitions sont regroupées dans une base de données BD du codeur CO. De telles partitions peuvent être de n'importe quelle forme.

Différentes partitions d'un macrobloc susceptibles d'être sélectionnées par le module de sélection SP, sont représentées à titre d'exemples non limitatifs sur la **figure 3.**

La figure 3A représente une partition initiale PA1 ayant la forme d'un carré.

La figure 3B représente une partition initiale PA1 ayant la forme d'une ligne.

L'étape suivante C2 représentée à **la figure 1** est le découpage du macrobloc MB selon une partition initiale PA1 choisie, telle que l'une de celles représentées à la figure 3, en n partitions PA1, PA2,..., PAn. Un tel découpage est effectué par un module PMB1 de partitionnement de macroblocs représenté à **la figure 2** qui utilise un algorithme de partitionnement ou qui effectue le partitionnement selon des partitions prédéterminées.

**La figure 4** représente les macroblocs MBpart qui ont été obtenus après découpage selon les partitions initiales PA1 représentées à **la figure 3.**

La figure 4A représente un macrobloc partitionné MBpart comprenant quatre partitions PA1,..., PA4, ayant toutes la forme d'un carré et le même nombre de pixels.

La figure 4B représente un macrobloc partitionné MBpart comprenant quatre partitions PA1...PA4, ayant toutes la forme d'une ligne et le même nombre de pixels.

Au cours d'une étape C3 représentée à **la figure 1,** le module de partitionnement PMB1 transmet le macrobloc MBpart qui vient d'être partitionné à un module de calcul CAL1 représenté à **la figure 2.**

Au cours d'une étape C4 représentée à **la figure 1,** le module de calcul CAL1 détermine un nombre E1 de prédicteurs spatiaux à utiliser pour calculer les différentes prédictions possibles du macrobloc partitionné MBpart reçu. Dans le cas par exemple où le mode de codage intra est de type 8x8, comme représenté en **figure 4A,** le module de calcul CAL1 détermine, de façon connue en soi, qu'il existe neuf prédicteurs spatiaux possibles P1, P2,..., P9.

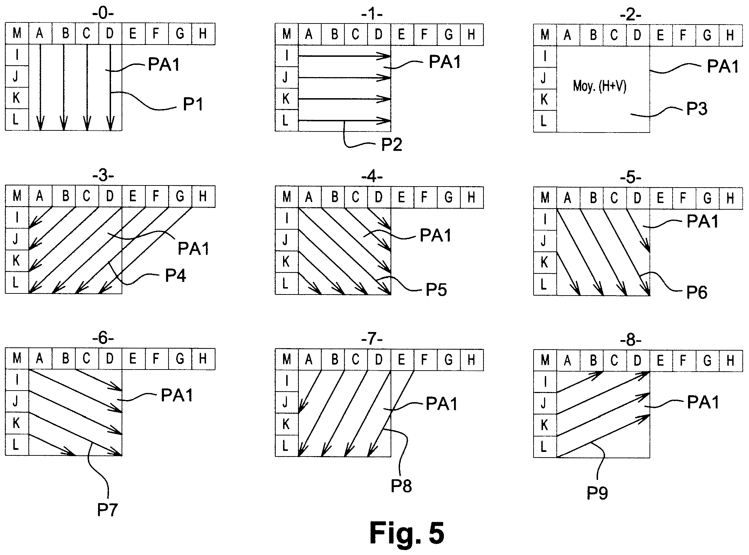

En référence à **la figure 5,** ces neuf prédicteurs spatiaux correspondent respectivement à neuf directions possibles par rapport auxquelles une partition PA1, PA2, PA3 ou PA4 courante peut être prédite par rapport à une partition de référence contenue dans la même image. Ces neuf directions comprennent classiquement :

- la direction verticale P1,
- la direction horizontale P2,
- la direction DC, P3, qui est une moyenne des deux directions précédentes,
- plusieurs directions diagonales P4 à P9.

En référence à **la figure 2,** une telle partition de référence est codée conformément à la norme H.264/MPEG-4AVC, c'est-à-dire qu'elle subit, de façon connue en soi:

- un codage par transformée en cosinus discrète et quantification qui est effectué par un module MTQ1 de transformée et de quantification,
- puis un décodage par transformée en cosinus discrète inverse et quantification inverse, lequel est effectué par le module MTQI1 de transformée et de quantification inverse.

Conformément à l'invention, au cours d'une étape C5, le module de calcul CAL1 transmet l'ensemble E1 des prédicteurs calculés à un module d'élimination de prédicteurs MELP1 dont la fonction est de supprimer les prédicteurs spatiaux redondants de cet ensemble, c'est-à-dire les prédicteurs susceptibles d'aboutir à des codages similaires.

A cet effet, le module MELP1 effectue l'algorithme suivant pour l'ensemble E1 contenant les neuf prédicteurs spatiaux P1, ..., Pj,..., P9 précités.

Pour $1 \leq i \leq 9$ et pour $2 \leq j \leq 9$, le module MELP1 calcule, au cours d'une étape C6, la différence Pj-Pi.

Au cours d'une étape C7, le module MELP1 applique une transformée à la différence calculée T1 (Pj-Pi).

Une telle transformée est, par exemple, en cosinus discrète telle que celle utilisée pour le codage et le décodage précités des partitions de référence.

En variante, d'autres transformées connues peuvent être utilisées, en particulier les transformées par ondelettes discrète, fractale, etc.....

Au cours d'une étape C8, le module MELP1 effectue l'opération de quantification suivante sur les coefficients de transformée obtenus: Q1(T1(Pj-Pi)).

L'opération de quantification consiste en une matrice à coefficients qui peut être de type psycho-visuelle, plane, etc...

Au cours d'une étape C9, le module MELP1 compare le résultat de la quantification obtenue à une valeur prédéterminée q1 comme suit:

$$Q1(T1(Pj-Pi)) \leq q1$$

Dans la pratique, le module MELP1 calcule l'équation suivante:

$$Q1opt(T1(Pj-Pi))=0$$

où Q1opt définit une matrice dont les coefficients sont choisis de façon à obtenir une élimination optimale des prédicteurs de l'ensemble E1.

La matrice de quantification Q1opt utilise un pas de quantification QP1opt qui, selon un mode de réalisation de l'invention, est fixé de manière empirique pour chaque mode de codage intra utilisé.

Il a été évalué après approximation que pour chaque mode intra, QP1opt est compris dans la fourchette suivante:

$0 \leq QP1opt \leq QP1+6$ où QP1 est le pas de quantification de la quantification utilisée pour le codage et le décodage précités des partitions de référence.

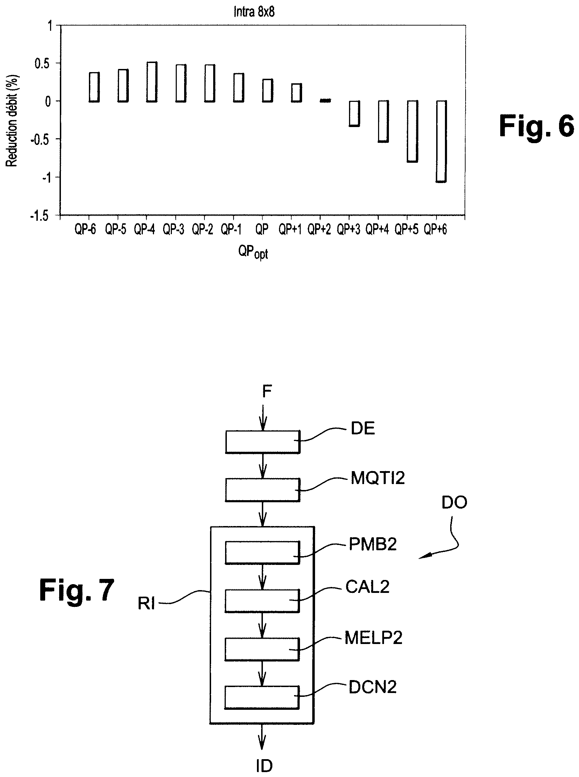

Comme on peut le voir sur la **figure 6,** dans le cas du mode de codage intra 8x8, en faisant varier OP1opt sur un ensemble d'images, une réduction maximale du débit est obtenue lorsque QP1opt=4.

Au cours de l'étape C9 précitée:

- si l'équation Q1opt(T1(Pj-Pi))=0 est vérifiée, le module MELP1 élimine le prédicteur Pj de l'ensemble E1 des prédicteurs E1res=E1-{Pj},
- si l'équation Q1opt(T1(Pj-Pi))=0 n'est pas vérifiée, c'est-à-dire Q1opt(T1(Pj-Pi))≠0, le module MELP1 conserve en mémoire le prédicteur Pj.

Au cours d'une étape C10, un module de calcul de prédiction PRED1 **(figure 1**) calcule les prédictions spatiales possibles de chaque partition PA1,..., PAn du macrobloc MBpart, par rapport un ensemble restreint de prédicteurs E1res comprenant uniquement les prédicteurs qui n'ont pas été éliminés précédemment. Une telle disposition a ainsi pour principal avantage de permettre d'obtenir une réduction du coût de l'indice du ou des prédicteurs, lequel indice est destiné à être transmis au décodeur DO représenté à **la figure 7.**

Une fois les différentes prédictions possibles calculées par le module de calcul de prédiction PRED1, au cours d'une étape C11 représentée à **la figure 1,** un module de décision DCN1, représenté à **la figure 2,** parcourt les macroblocs partitionnés de l'image IE et choisit, dans cette étape C11, le prédicteur utilisé pour coder chacun de ces macroblocs. Parmi les prédictions possibles pour un macrobloc, le module de décision DCN1 choisit la prédiction optimale selon un critère débit distorsion bien connu de l'homme du métier.

Pour un macrobloc MB courant à coder, le module de décision DCN1 met en compétition les prédicteurs de l'ensemble restreint de prédicteurs E1res.

Chaque macrobloc prédit MBpréd est ensuite codé, au cours d'une étape C12, comme dans la norme H.264/MPEG-4 AVC.

Une fois ce codage structurel effectué par le module de décision DCN1, les coefficients de résidus s'ils existent, correspondants aux blocs de l'image IE, sont envoyés au module MTQ1 de transformée et de quantification, pour subir des transformées en cosinus discrètes puis une quantification. Les tranches de macroblocs avec ces coefficients quantifiés sont ensuite transmises au module CE de codage entropique, pour produire, avec les autres images de la séquence vidéo déjà codées de la même façon que l'image IE, un flux vidéo F, binaire, codé selon l'invention.

Le flux binaire F ainsi codé est transmis par un réseau de communication, à un terminal distant. Celui-ci comporte le décodeur DO représenté à la **figure 7.**

Le flux binaire F est d'abord envoyé à un module DE de décodage entropique, décodage inverse de celui effectué par le module de codage entropique CE représenté à **la figure 2.** Puis, pour chaque macrobloc d'image à reconstruire, les coefficients décodés par le module DE sont envoyés à un module MQTI2 de quantification inverse et de transformée inverse.

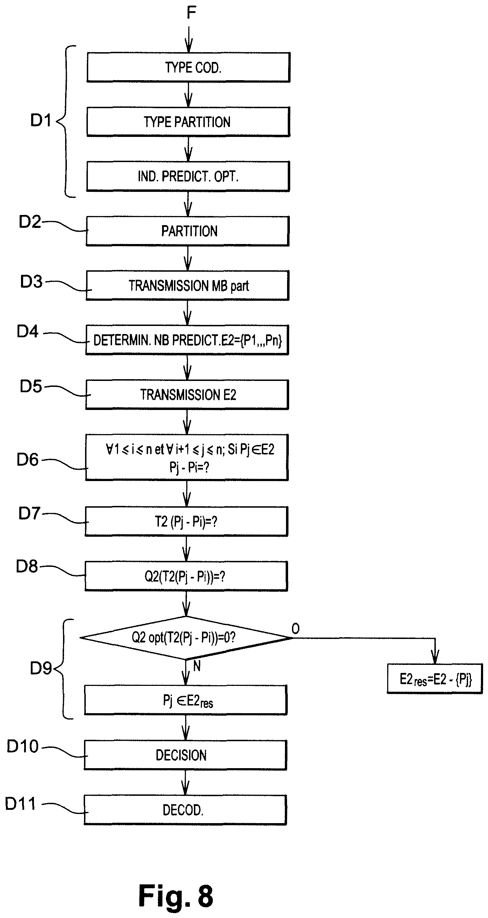

Un module RI de reconstruction d'image reçoit alors des données décodées correspondant aux données produites par le module DCN1 (**figure 2**) à l'étape C12 de codage selon l'invention, aux erreurs de transmission près. Le module RI met en oeuvre des étapes D1 à D11 du procédé de décodage selon l'invention, telle que représentées à la **figure 8.**

La première étape D1 est le décodage de structures de données codées dans une tranche d'un macrobloc courant de l'image IE à décoder. De façon connue en soi, le module de reconstruction RI détermine à partir des données de ladite tranche de macrobloc:

- le type de codage desdites données, Intra ou Inter: Intra dans le mode réalisation décrit,
- le type de partitionnement du macrobloc à reconstruire, Intra 4x4, 8x8, ligne, etc...: Intra 8x8 dans le mode de réalisation décrit.
- l'indice du prédicteur optimal tel que sélectionné par le module de décision DCN1 à l'étape C11.

L'étape suivante D2 représentée à **la figure 8** est le découpage du macrobloc courant à décoder, conformément au partitionnement déterminé à l'étape D1. A cet effet, un module PMB2 de partitionnement de macroblocs, qui ressemble en tous points à celui représenté à **la figure 2,** découpe le macrobloc en une pluralité de n partitions PA1, PA2,..., PAn.

A la suite de l'étape de partitionnement D2, au cours d'une étape D3 représentée à **la figure 8,** le module de partitionnement PMB2 transmet le macrobloc courant à décoder et qui vient d'être partitionné en n partitions, à un module de calcul CAL2 représenté à **la figure 7,** qui est en tous points semblable au module de calcul CAL1 du codeur CO de la figure 1.

Au cours d'une étape D4 représentée à la **figure 8,** le module de calcul CAL2 détermine le nombre E2 de prédicteurs spatiaux à utiliser pour calculer les différentes prédictions possibles du macrobloc partitionné MBpart reçu.

Au cours d'une étape D5, le module de calcul CAL2 transmet l'ensemble E2 des prédicteurs calculés à un module d'élimination de prédicteurs MELP2, qui est en tous points semblable au module d'élimination de prédicteurs MELP1 du codeur CO de **la figure 1.**

Au cours des étapes D6 à D9, le module d'élimination de prédicteurs MELP2 effectue le même algorithme que celui effectué par le module MELP1 du codeur CO précité, pour supprimer les prédicteurs spatiaux redondants de l'ensemble E2, c'est-à-dire les prédicteurs susceptibles d'aboutir à des décodages similaires, et obtenir un ensemble réduit E2res de prédicteurs.

Au cours d'une étape D10 représentée à la **figure 8,** un module de décision DCN2, représenté à **la figure 7,** parcourt les macroblocs partitionnés et choisit un prédicteur pour décoder chacun de ces macroblocs. Parmi les prédictions possibles pour un macrobloc, le module de décision DCN2 choisit la prédiction optimale selon un critère débit distorsion bien connu de l'homme du métier.

Pour un macrobloc MB courant à décoder, le module de décision DCN2 met en compétition les prédicteurs de l'ensemble restreint de prédicteurs E2res.

Chaque macrobloc prédit est ensuite décodé, au cours d'une étape D11, comme dans la norme H.264/MPEG-4 AVC.

Une fois tous les macroblocs de l'image IE décodés, le module RI de reconstruction d'image fournit en sortie du décodeur DO, une image ID correspondant au décodage de l'image IE.

Compte tenu du fait que l'algorithme d'élimination de prédicteurs effectué au décodeur DO est en tous point le même que celui effectué au codeur CO, le coût de l'information induit par les prédicteurs utilisés s'en trouve fortement réduit.

Description détaillée d'un second mode de réalisation

Le second mode de réalisation décrit ci-dessous se distingue du précédent, par le fait que le dispositif de codage CO représenté à la **figure 2** effectue un codage de type Inter au lieu d'un codage de type intra.

Un but du second mode de réalisation est de parvenir, pour chaque bloc à coder, à éliminer la résolution subpixellique de façon à réduire le coût des vecteurs de déplacement considérés.

De façon similaire à l'étape C1 précédente du mode intra, le module SP de sélection sélectionne des partitions qui, dans l'exemple décrit, ont toutes la forme d'un bloc.

De façon similaire à l'étape C2 précédente du mode intra, un macrobloc courant est découpé selon n partitions, par exemple en seize blocs 4x4.

L'étape suivante C3 est la même que celle effectuée lors du codage intra précité.

A l'étape C4 suivante, un module de calcul CAL1 du module de prédiction PRED1 détermine le nombre de prédicteurs non plus spatiaux, mais temporels, à utiliser pour calculer les différentes prédictions possibles d'un bloc courant 4x4.

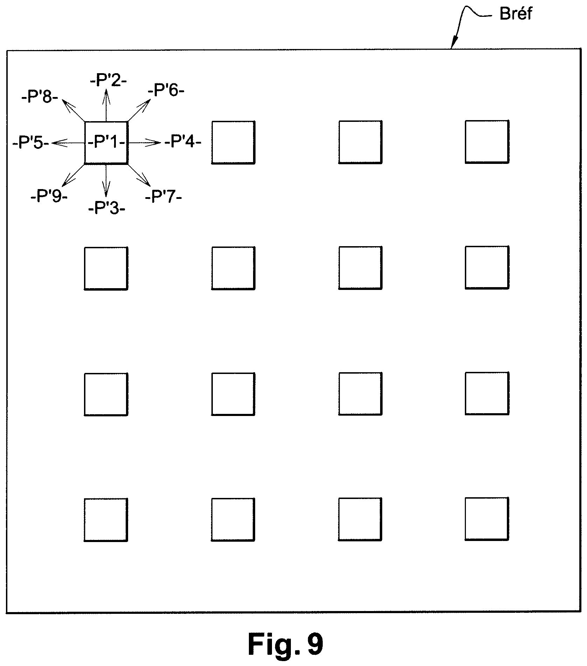

De façon connue en soi, le module de calcul CAL1 détermine les différentes directions prises par le vecteur de déplacement qui décrit le mouvement entre le bloc courant et un bloc de référence Bréf représenté **figure 9.** Le bloc de référence Bréf appartient à une image de référence, par exemple l'image précédente de la séquence. Dans le cas par exemple où le vecteur de déplacement est fractionné au demi-pixel, de façon connue en tant que telle, le module de calcul CAL1 calcule au total, pour un pixel de référence, les neuf prédicteurs suivants, tels que représentés à **la figure 9:**

- P'1: vecteur au pixel entier,
- P'2: vecteur au ½ pixel dans la direction verticale montante,
- P'3: vecteur au ½ pixel dans la direction verticale descendante,
- P'4: vecteur au ½ pixel dans la direction horizontale droite,
- P'5: vecteur au ½ pixel dans la direction horizontale gauche,
- P'6: vecteur au ½ pixel dans la direction diagonale droite montante,
- P'7: vecteur au ½ pixel dans la direction diagonale droite descendante,
- P'8: vecteur au ½ pixel dans la direction diagonale gauche montante,
- P'9: vecteur au ½ pixel dans la direction diagonale gauche descendante.

De façon similaire à l'étape C5 précitée, le module de calcul CAL1 transmet l'ensemble E'1 des vecteurs P'1 à P'9 calculés au module d'élimination de prédicteurs MELP1.

De façon similaire aux étapes C6 à C9 du mode Intra, le module d'élimination MELP1 effectue l'algorithme suivant pour l'ensemble E'1 contenant les neuf prédicteurs temporels P'1, ..., P'j,..., P'9 précités.

Dans la pratique, le module MELP1 calcule l'équation suivante:

$$Q'1opt(T'1(P'j-P'1))=0 \quad pour \ 2{\leq}j{\leq}n$$

où Q'1opt définit une matrice dont les coefficients sont choisis de façon à obtenir une élimination optimale de l'ensemble E'1 des vecteurs au demi-pixel.

La matrice de quantification Q'1opt utilise un pas de quantification QP'1opt qui, selon un mode de réalisation de l'invention, est fixé de manière empirique pour chaque mode de codage inter utilisé.

Il a été évalué après approximation que, dans le cas du mode inter 4x4, avec résolution au demi-pixel, une compression maximale était obtenue avec QP'1opt=17.

Au cours de l'étape C9 précitée:

- si l'équation Q'1opt(T'1(P'j-P'1))=0 est vérifiée M fois, par exemple pour la moitié des vecteurs au demi-pixel considérés, le module MELP1 élimine de l'ensemble E'1 tous les prédicteurs P'2 à P'9 au demi-pixel, de façon à obtenir un ensemble réduit de prédicteurs à savoir un ensemble E'1res=P'1 qui est réduit au vecteur P'1 au pixel entier,
- si l'équation Q'1opt(T'1(P'j-P'1))=0 n'est pas vérifiée, le module MELP1 conserve en mémoire le prédicteur P'j.

Les étapes suivantes de choix de prédiction optimale C11 et de codage C12 sont respectivement semblables aux étapes précitées C11 et C12 du mode Intra et, pour cette raison, ne seront pas décrites à nouveau.

Le module de reconstruction RI du décodeur DO met ensuite en oeuvre des étapes D1 à D11 similaires à celles du procédé de décodage qui a été décrit ci-dessus pour le mode Intra, mais adapté cette fois au mode Inter.

La première étape D1 est le décodage de structures de données codées dans une tranche d'un macrobloc courant de l'image IE à décoder. De façon connue en soi, le module de reconstruction RI détermine à partir des données de ladite tranche de macrobloc:

- le type de codage desdites données Inter, dans le mode de éalisation décrit,
- le type de partitionnement du macrobloc à reconstruire, Inter 4x4 dans le mode réalisation décrit,
- l'indice du vecteur de déplacement optimal tel que sélectionné par le module de décision DCN1 à l'étape C11.

Au cours de l'étape suivante D2, le module PMB2 de partitionnement de macroblocs découpe le macrobloc en seize blocs 4x4.

A la suite de l'étape de partitionnement D2, au cours d'une étape D3 similaire à celle du mode Intra précitée, le module de partitionnement PMB2 transmet le macrobloc courant à décoder et qui vient d'être partitionné en seize partitions, au module de calcul CAL2 précité.

Le module de calcul CAL2 détermine au cours d'une étape D4 le nombre E'2 de prédicteurs temporels à utiliser pour calculer les différentes prédictions possibles du macrobloc partitionné MBpart reçu.

Au cours d'une étape D5, le module de calcul CAL2 transmet l'ensemble E'2 des neufs vecteurs de déplacement P'1 à P'9 calculés au module d'élimination de prédicteurs MELP2 précité.

Au cours des étapes D6 à D9, le module d'élimination de prédicteurs MELP2 effectue le même algorithme que celui effectué par le module MELP1 du codeur CO précité, pour supprimer les vecteurs au demi-pixel de l'ensemble E'2, et obtenir ainsi un ensemble réduit E2res qui ne comprend plus que le vecteur au pixel entier P'1.

Au cours d'une étape D10, le module de décision DCN2 parcourt les macroblocs partitionnés et choisit un vecteur pour décoder chacun de ces macroblocs. Parmi les prédictions possibles pour un macrobloc, le module de décision DCN2 choisit le vecteur de déplacement optimal selon un critère débit distorsion bien connu de l'homme du métier.

Pour un macrobloc MB courant à décoder, le module de décision DCN2 met en compétition les vecteurs de l'ensemble restreint de prédicteurs E'2res. Compte tenu du fait que E'2res ne contient que le vecteur P'1, le module de décision DCN2 sélectionne ce vecteur par défaut.

Chaque macrobloc prédit est ensuite décodé, au cours de l'étape D11, comme dans la norme H.264/MPEG-4 AVC.

Une fois tous les macroblocs de l'image IE décodés, le module RI de reconstruction d'image fournit en sortie du décodeur DO, une image ID correspondant au décodage de l'image IE.

Compte tenu du fait que l'algorithme d'élimination de prédicteurs effectué au décodeur DO est en tous point le même que celui effectué au codeur CO, le coût de l'information induit par les vecteurs au demi-pixel utilisés s'en trouve fortement réduit.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Ainsi par exemple, les opérations de quantification Q1 (respectivement Q2) utilisées pour éliminer un certain nombre de prédicteurs calculés pour le codage (respectivement le décodage) peuvent subir des post-traitements au même titre que l'opération de quantification effectuée au moment du codage (respectivement du décodage). Un exemple d'un tel post-traitement consiste par exemple à mettre à zéro l'ensemble des coefficients de la matrice de quantification lorsque les coefficients sont en majorité égaux à zéro.

S'agissant du second mode de réalisation, il est également possible de prendre en compte, en plus des vecteurs de déplacement au demi-pixel, les vecteurs de déplacement au quart de pixel et/ou au huitième de pixel, ..., et/ou au nième de pixel. Le choix d'un ou de plusieurs types de fractionnement du vecteur de déplacement sera effectué en fonction de la résolution de l'image à coder.

**Revendications**

1. Procédé de codage d'une image ou d'une séquence d'images générant un flux (F) de données comportant des données représentatives d'au moins un groupe de pixels (MB) dans une desdites images (IE), ledit procédé comprenant les étapes de :

  - calcul (C4), en relation avec ledit groupe de pixels (MB), d'un nombre prédéterminé de prédicteurs selon le mode de codage utilisé pour coder lesdites données,
  - sélection d'un prédicteur optimal par rapport à un critère de performance de codage prédéterminé,
  - -entre lesdites étapes de calcul et de sélection, une étape d'élimination d'au moins un prédicteur dudit nombre prédéterminé calculé, qui consiste, pour au moins deux ième (Pi) et jème (Pj) prédicteurs, ledit procédé étant **caractérisé en ce que** l'étape d'élimination comprend:

    - calculer (C6) la différence entre les deux groupes de pixels prédits associés respectivement auxdits jème et ième prédicteurs,
    - appliquer (C7) une transformée à ladite différence calculée,
    - effectuer (C9) une opération de quantification sur le résultat de la transformée appliquée,
    - comparer le résultat de ladite opération de quantification à une valeur prédéterminée,
    - éliminer le jème prédicteur dans le cas où le résultat de ladite opération de quantification est inférieur ou égal à ladite valeur prédéterminée.

2. Procédé de codage selon la revendication 1, **caractérisé en ce que** l'opération de quantification utilise une matrice de quantification (Q1opt) dont les coefficients sont choisis selon le mode de codage utilisé pour coder lesdites données représentatives d'au moins un groupe de pixel.

3. Procédé de codage selon la revendication 1 ou la revendication 2, **caractérisé en ce que** l'opération de quantification utilise, comme paramètre, un pas de quantification qui est le même que celui utilisé par une opération de quantification effectuée lors du codage.

4. Procédé de codage selon la revendication 1, **caractérisé en ce que** les prédicteurs sont de type spatial ou temporel.

5. Procédé de décodage d'un flux (F) de données représentatif d'une image ou d'une séquence d'images, ledit flux (F) comportant des données représentatives d'au moins un groupe de pixels dans une desdites images (IE), ledit procédé comprenant les étapes de :

  - lecture d'un indice de prédicteur optimal contenu dans ledit flux, ledit indice étant fonction d'un nombre prédéterminé de prédicteurs (P1,...,Pn) en relation avec ledit groupe de pixels,
  - calcul dudit prédicteur optimal à partir de l'indice lu, ledit procédé étant **caractérisé en ce**

**que** préalablement à l'étape de lecture, il comprend les étapes consistant à :

- calculer (D4) ledit nombre prédéterminé de prédicteurs (P1,...,Pn) selon le mode de codage utilisé pour coder lesdites données,
- pour au moins deux ième (Pi) et jème (Pj) prédicteurs, calculer (D6) la différence entre les deux groupes de pixels prédits associés respectivement auxdits jème et ième prédicteurs,
- appliquer (D7) une transformée à ladite différence calculée,
- effectuer (D8) une opération de quantification sur le résultat de la transformée appliquée,
- comparer (D9) le résultat de ladite opération de quantification à une valeur prédéterminée,
- éliminer le jème prédicteur dans le cas où le résultat de ladite opération de quantification est inférieur ou égal à ladite valeur prédéterminée, de façon à ce que ledit indice de prédicteur optimal lu au cours de ladite étape de lecture soit fonction d'un nombre réduit de prédicteurs.

6. Procédé de décodage selon la revendication 5, **caractérisé en ce que** l'opération de quantification utilise une matrice de quantification dont les coefficients sont choisis selon le mode de codage utilisé pour coder lesdites données représentatives d'au moins un groupe de pixel.

7. Procédé de décodage selon la revendication 5 ou la revendication 6, **caractérisé en ce que** l'opération de quantification utilise, comme paramètre, un pas de quantification qui est le même que celui utilisé par une opération de quantification effectuée lors du décodage.

8. Procédé de décodage selon la revendication 5, **caractérisé en ce que** les prédicteurs sont de type spatial ou temporel.

9. Dispositif de codage (CO) d'une image ou d'une séquence d'images générant un flux (F) de données comportant des données représentatives d'au moins un groupe de pixels dans une desdites images (IE), ledit dispositif comprenant :

    - un module (CAL1) de calcul d'un nombre prédéterminé de prédicteurs (P1,..., Pn) en relation avec ledit groupe de pixels (MB), ledit nombre dépendant du mode de codage utilisé pour coder lesdites données,
    - un module de décision (DCN1) pour déterminer un prédicteur optimal par rapport à un critère de performance de codage prédéterminé,

ledit dispositif étant **caractérisé en ce qu'**il comprend en outre :

    - un module d'élimination (MELP1) d'au moins un prédicteur dudit nombre prédéterminé qui comporte des moyens de calcul pour, relativement à au moins deux ième (Pi) et jème (Pj) prédicteurs:

        • déterminer la différence entre les deux groupes de pixels prédits associés respectivement auxdits jème et ième prédicteurs (Pj-Pi),
        • appliquer une transformée à ladite différence calculée,
        • effectuer une opération de quantification sur le résultat de la transformée appliquée,
        • comparer le résultat de ladite opération de quantification à une valeur prédéterminée,
        • éliminer le jème prédicteur dans le cas où le résultat de ladite opération de quantification est inférieur ou égal à ladite valeur prédéterminée.

10. Dispositif (DO) de décodage d'un flux (F) de données représentatif d'une image ou d'une séquence d'images, ledit flux (F) comportant des données représentatives d'au moins un groupe de pixels dans une desdites images (IE), ledit dispositif comprenant :

    - un module de lecture d'un indice de prédicteur optimal contenu dans ledit flux, ledit indice étant fonction d'un nombre prédéterminé (E) de prédicteurs (P1,...,Pn) en relation avec ledit groupe de pixels,
    - un module de calcul dudit prédicteur optimal à partir de l'indice lu,

ledit dispositif étant **caractérisé en ce qu'**il comprend en outre :

    - un module (CAL2) de calcul dudit nombre prédéterminé de prédicteurs (P1,...,Pn) selon le mode de codage utilisé pour coder lesdites données,
    - un module d'élimination (MELP2) d'au moins un prédicteur dudit nombre prédéterminé qui comporte :

        • des moyens de calcul pour, relativement à au moins deux ième (Pi) et jème (Pj) prédicteurs :

            ✓déterminer la différence entre les deux groupes de pixels prédits associés respectivement auxdits jème et ième prédicteurs (Pj-Pi),
            ✓appliquer une transformée à ladite différence calculée,
            ✓effectuer une opération de quantification sur le résultat de la transformée appliquée,

✓ comparer le résultat de ladite opération de quantification à une valeur prédéterminée,

✓ éliminer le jème prédicteur dans le cas où le résultat de ladite opération de quantification est inférieur ou égal à ladite valeur prédéterminée,

• des moyens de transmission pour transmettre audit module de lecture le nombre prédéterminé réduit de prédicteurs obtenu.

11. Programme d'ordinateur comportant des instructions pour mettre en oeuvre l'un des procédés selon l'une quelconque des revendications 1 à 8, lorsqu'il est exécuté sur un ordinateur.

**Patentansprüche**

1. Verfahren zur Codierung eines Bildes oder einer Bildsequenz, das einen Datenfluss (F) erzeugt, umfassend repräsentative Daten für mindestens eine Gruppe von Pixel (MB) in einem der Bilder (IE), wobei das Verfahren die folgenden Schritte umfasst:

- in Verbindung mit der Pixelgruppe (MB) Berechnung (C4) einer vorbestimmten Anzahl von Prädiktoren nach dem Codierungsmodus, der zur Codierung der Daten verwendet wird,
- Auswahl eines optimalen Prädiktors in Bezug auf ein vorbestimmtes Codierungsleistungskriterium,
- zwischen den Berechnungs- und Auswahlschritten einen Schritt der Beseitigung mindestens eines Prädiktors der berechneten vorbestimmten Anzahl, der darin besteht, für mindestens zwei i-te (Pi) und j-te (Pj) Prädiktoren, wobei das Verfahren **dadurch gekennzeichnet ist, dass** der Beseitigungsschritt umfasst:

- die Differenz zwischen den zwei vorhergesagten Pixelgruppen, die dem j-ten bzw. i-ten Prädiktor zugeordnet sind, zu berechnen (C6),
- eine Transformierte an die berechnete Differenz anzulegen (C7),
- einen Quantifizierungsvorgang an dem Resultat der angelegten Transformierten durchzuführen (C9),
- das Resultat des Quantifizierungsvorgangs mit einem vorbestimmten Wert zu vergleichen,
- den j-ten Prädiktor zu beseitigen, wenn das Resultat des Quantifizierungsvorgangs kleiner oder gleich dem vorbestimmten Wert ist.

2. Codierungsverfahren nach Anspruch 1, **dadurch gekennzeichnet, dass** der Quantifizierungsvorgang eine Quantifizierungsmatrix (Q1opt) verwendet, deren Koeffizienten nach dem Codierungsmodus ausgewählt sind, der zur Codierung der für mindestens eine Pixelgruppe repräsentativen Daten verwendet wird.

3. Codierungsverfahren nach Anspruch 1 oder Anspruch 2, **dadurch gekennzeichnet, dass** der Quantifizierungsvorgang als Parameter einen Quantifizierungsschritt verwendet, der derselbe wie jener ist, der von einem bei der Codierung durchgeführten Quantifizierungsschritt verwendet wird.

4. Codierungsverfahren nach Anspruch 1, **dadurch gekennzeichnet, dass** die Prädiktoren räumlichen oder zeitlichen Typs sind.

5. Verfahren zur Decodierung eines Datenflusses (F), der für ein Bild oder eine Bildsequenz repräsentativ ist, wobei der Fluss (F) repräsentative Daten für mindestens eine Pixelgruppe in einem der Bilder (IE) umfasst, wobei das Verfahren die folgenden Schritte umfasst:

- Ablesen eines optimalen Prädiktorindexes, der in dem Fluss enthalten ist, wobei der Index von einer vorbestimmten Anzahl von Prädiktoren (P1, ..., Pn) in Verbindung mit der Pixelgruppe abhängt,
- Berechnung des optimalen Prädiktors auf Basis des abgelesenen Indexes,

wobei das Verfahren **dadurch gekennzeichnet ist, dass** es vor dem Schritt des Ablesens die folgenden Schritte umfasst, darin bestehend:

- die vorbestimmte Anzahl von Prädiktoren (P1, ..., Pn) nach dem Codierungsmodus, der für die Codierung der Daten verwendet wird, zu berechnen (D4),
- für mindestens zwei i-te (Pi) und j-te (Pj) Prädiktoren die Differenz zwischen den zwei vorhergesagten Pixelgruppen, die dem j-ten bzw. i-ten Prädiktor zugeordnet sind, zu berechnen (D6),
- eine Transformierte an die berechnete Differenz anzulegen (D7),
- einen Quantifizierungsvorgang an dem Resultat der angelegten Transformierten durchzuführen (D8),
- das Resultat des Quantifizierungsvorgangs mit einem vorbestimmten Wert zu vergleichen (D9),
- den j-ten Prädiktor zu beseitigen, falls das Resultat des Quantifizierungsvorgangs kleiner oder gleich dem vorbestimmten Wert ist, so dass der optimale Prädiktorindex, der während des Schritts des Ablesens abgelesen wird, von einer reduzierten Anzahl von Prädiktoren abhängt.

6. Decodierungsverfahren nach Anspruch 5, **dadurch gekennzeichnet, dass** der Quantifizierungsvorgang eine Quantifizierungsmatrix verwendet, deren Koeffizienten nach dem Codierungsmodus ausgewählt sind, der zur Codierung der für mindestens eine Pixelgruppe repräsentativen Daten verwendet wird.

7. Codierungsverfahren nach Anspruch 5 oder Anspruch 6, **dadurch gekennzeichnet, dass** der Quantifizierungsvorgang als Parameter einen Quantifizierungsschritt verwendet, der derselbe wie jener ist, der von einem bei der Decodierung durchgeführten Quantifizierungsschritt verwendet wird.

8. Codierungsverfahren nach Anspruch 5, **dadurch gekennzeichnet, dass** die Prädiktoren räumlichen oder zeitlichen Typs sind.

9. Vorrichtung zur Codierung (CO) eines Bildes oder einer Bildsequenz, die einen Datenfluss (F) erzeugt, umfassend repräsentative Daten für mindestens eine Pixelgruppe in einem der Bilder (IE) erzeugt, wobei die Vorrichtung umfasst:

- ein Modul (CAL1) zur Berechnung einer vorbestimmten Anzahl von Prädiktoren (P1, ..., Pn) in Verbindung mit der Pixelgruppe (MB), wobei die Anzahl von dem für die Codierung der Daten verwendeten Codierungsmodus abhängt,
- ein Entscheidungsmodul (DCN1), um einen optimalen Prädiktor in Bezug zu einem vorbestimmten Codierungsleistungskriterium zu bestimmen,

wobei die Vorrichtung **dadurch gekennzeichnet ist, dass** sie ferner umfasst:

- ein Modul (MELP1) zur Beseitigung mindestens eines Prädiktors der vorbestimmten Anzahl, das Berechnungsmittel umfasst, um in Zusammenhang mit mindestens zwei i-ten (Pi) und j-ten (Pj) Prädiktoren:

* die Differenz zwischen den zwei vorhergesagten Pixelgruppen, die dem j-ten bzw. i-ten Prädiktor (Pj-Pi) zugeordnet sind, zu bestimmen,
* eine Transformierte an die berechnete Differenz anzulegen,
* einen Quantifizierungsvorgang an dem Resultat der angelegten Transformierten durchzuführen,
* das Resultat des Quantifizierungsvorgangs mit einem vorbestimmten Wert zu vergleichen,
* den j-ten Prädiktor zu beseitigen, wenn das Resultat des Quantifizierungsvorgangs kleiner oder gleich dem vorbestimmten Wert ist.

10. Vorrichtung zur Decodierung (DO) eines Datenflusses (F), der für ein Bild oder eine Bildsequenz repräsentativ ist, wobei der Datenfluss (F) repräsentative Daten für mindestens eine Pixelgruppe in einem der Bilder (IE) umfasst, wobei die Vorrichtung umfasst:

- ein Modul zum Ablesen eines optimalen Prädiktorindexes, der in dem Fluss enthalten ist, wobei der Index von einer vorbestimmten Anzahl (E) von Prädiktoren (P1, ..., Pn) in Verbindung mit der Pixelgruppe abhängt,
- ein Modul zur Berechnung des optimalen Prädiktors aus dem abgelesenen Index,

wobei die Vorrichtung **dadurch gekennzeichnet ist, dass** sie ferner umfasst:

- ein Modul (CAL2) zur Berechnung der vorbestimmten Anzahl von Prädiktoren (P1, ..., Pn) nach dem für die Codierung der Daten verwendeten Codierungsmodus,
- ein Modul (MELP2) zur Beseitigung mindestens eines Prädiktors der vorbestimmten Anzahl, das umfasst:

* Berechnungsmittel, um in Zusammenhang mit mindestens zwei i-ten (Pi) und j-ten (Pj) Prädiktoren:

◦ die Differenz zwischen den zwei vorhergesagten Pixelgruppen, die dem j-ten bzw. i-ten Prädiktor (Pj-Pi) zugeordnet sind, zu bestimmen,
◦ eine Transformierte an die berechnete Differenz anzulegen,
◦ einen Quantifizierungsvorgang an dem Resultat der angelegten Transformierten durchzuführen,
◦ das Resultat des Quantifizierungsvorgangs mit einem vorbestimmten Wert zu vergleichen,
° den j-ten Prädiktor zu beseitigen, wenn das Resultat des Quantifizierungsvorgangs kleiner oder gleich dem vorbestimmten Wert ist

* Übertragungsmittel, um die an das Lesemodul die erhaltene reduzierte vorbestimmte Anzahl von Prädiktoren zu übertragen.

11. Computerprogramm, umfassend Befehle für den Einsatz eines der Verfahren nach einem der Ansprüche 1 bis 8, wenn es auf einem Computer ausgeführt wird.

**Claims**

1. Method of coding an image or a sequence of images generating a data stream (F) comprising data representative of at least one group of pixels (MB) in one of said images (IE), said method comprising the steps of:

   - calculating (C4), in relation to said group of pixels (MB), a predetermined number of predictors according to the coding mode used for coding said data,
   - selecting an optimum predictor relative to a predetermined coding performance criterion,
   - between said calculation and selection steps, a step of eliminating at least one predictor from said calculated predetermined number, which consists, for at least two ith (Pi) and jth (Pj) predictors, said method being **characterized in that** said elimination step comprises:

      - calculating (C6) the difference between the two groups of predicted pixels respectively associated with said jth and ith predictors,
      - applying (C7) a transform to said calculated difference,
      - performing (C9) a quantization operation on the result of the applied transform,
      - comparing the result of said quantization operation to a predetermined value,
      - eliminating the jth predictor in the case where the result of said quantization operation is less than or equal to said predetermined value.

2. Coding method according to Claim 1, **characterized in that** the quantization operation uses a quantization matrix (Q1opt) whose coefficients are chosen according to the coding mode used to code said data representative of at least one group of pixels.

3. Coding method according to Claim 1 or Claim 2, **characterized in that** the quantization operation uses, as parameter, a quantization step which is the same as that used by a quantization operation performed during the coding.

4. Coding method according to Claim 1, **characterized in that** the predictors are of spatial or temporal type.

5. Method of decoding a data stream (F) representative of an image or of a sequence of images, said stream (F) comprising data representative of at least one group of pixels in one of said images (IE), said method comprising the steps of:

   - reading an optimum predictor index contained in said stream, said index being a function of a predetermined number of predictors (P1, ..., Pn) in relation to said group of pixels,
   - calculating said optimum predictor from the index read,

   said method being **characterized in that**, prior to the reading step, it comprises the steps consisting in:

   - calculating (D4) said predetermined number of predictors (P1, ..., Pn) according to the coding mode used for coding said data,
   - for at least two ith (Pi) and jth (Pj) predictors, calculating (D6) the difference between the two groups of predicted pixels respectively associated with said jth and ith predictors,
   - applying (D7) a transform to said calculated difference,
   - performing (D8) a quantization operation on the result of the applied transform,
   - comparing (D9) the result of said quantization operation to a predetermined value,
   - eliminating the jth predictor in the case where the result of said quantization operation is less than or equal to said predetermined value, so that said optimum predictor index read during said reading step is a function of a reduced number of predictors.

6. Decoding method according to Claim 5, **characterized in that** the quantization operation uses a quantization matrix whose coefficients are chosen according to the coding mode used to code said data representative of at least one group of pixels.

7. Decoding method according to Claim 5 or Claim 6, **characterized in that** the quantization operation uses, as parameter, a quantization step which is the same as that used by a quantization operation performed during the decoding.

8. Decoding method according to Claim 5, **characterized in that** the predictors are of spatial or temporal type.

9. Device (CO) for coding an image or a sequence of images generating a data stream (F) comprising data representative of at least one group of pixels in one of said images (IE), said device comprising:

   - a module (CAL1) for calculating the predetermined number of predictors (P1, ..., Pn) in relation to said group of pixels (MB), said number depending on the coding mode used for coding said data,

- a decision module (DCN1) for determining an optimum predictor relative to a predetermined coding performance criterion,

said device being **characterized in that** it also comprises:

- a module (MELP1) for eliminating at least one predictor from said predetermined number which comprises calculation means for, relative to at least two ith (Pi) and jth (Pj) predictors:

    • determining the difference between the two groups of predicted pixels respectively associated with said jth and ith predictors (Pj-Pi),
    • applying a transform to said calculated difference,
    • performing a quantization operation on the result of the applied transform,
    • comparing the result of said quantization operation to a predetermined value,
    • eliminating the jth predictor in the case where the result of said quantization operation is less than or equal to said predetermined value.

**10.** Device (DO) for decoding a data stream (F) representative of an image or of a sequence of images, said stream (F) comprising data representative of at least one group of pixels in one of said images (IE), said device comprising:

    - a module for reading an optimum predictor index contained in said stream, said index being a function of a predetermined number (E) of predictors (P1, ..., Pn) in relation to said group of pixels,
    - a module for calculating said optimum predictor from the index read,

said device being **characterized in that** it also comprises:

    - a module (CAL2) for calculating said predetermined number of predictors (P1, ..., Pn) according to the coding mode used for coding said data,
    - a module (MELP2) for eliminating at least one predictor from said predetermined number which comprises:

        • calculation means for, relative to at least two ith (Pi) and jth (Pj) predictors:

            ✔ determining the difference between the two groups of predicted pixels respectively associated with said jth and ith predictors (Pj-Pi),
    ✔ applying a transform to said calculated difference,
    ✔ performing a quantization operation on the result of the applied transform,
    ✔ comparing the result of said quantization operation to a predetermined value,
    ✔ eliminating the jth predictor in the case where the result of said quantization operation is less than or equal to said predetermined value,

    • transmission means for transmitting the reduced predetermined number of predictors obtained to said read module.

**11.** Computer program comprising instructions for implementing one of the methods according to any one of Claims 1 to 8, when it is executed on a computer.

MB

C1 — SELECT. PARTITION

C2 — PARTITION

C3 — TRANSMISSION MB part

C4 — DETERMIN. NB PREDICT.E1={P1,,,Pn}

C5 — TRANSMISSION E1

C6 — $\forall 1 \leq i \leq n$ et $\forall i+1 \leq j \leq n$, Si $Pj \in E1$
$Pj - Pi = ?$

C7 — $T1(Pj - Pi) = ?$

C8 — $Q1(T1(Pj - Pi)) = ?$

C9 — $Q1 \, opt(T1(Pj - Pi)) = 0?$ —O→ $E1_{res} = E1 - \{Pj\}$
N
$Pj \in E1_{res}$

C10 — PREDICTION MB part / $E1_{res}$

C11 — DECISION

C12 — CODAGE

# Fig. 1

**Fig. 2**

**Fig. 3A**      **Fig. 3B**

**Fig. 4A**      **Fig. 4B**

Fig. 5

EP 2 351 373 B1

**Fig. 6**

**Fig. 7**

F

```
        ┌──────────────────────────┐
        │        TYPE COD.         │
        └──────────────────────────┘
                    │
        ┌──────────────────────────┐
   D1   │      TYPE PARTITION      │
        └──────────────────────────┘
                    │
        ┌──────────────────────────┐
        │     IND. PREDICT. OPT.   │
        └──────────────────────────┘
                    │
        ┌──────────────────────────┐
   D2   │        PARTITION         │
        └──────────────────────────┘
                    │
        ┌──────────────────────────┐
   D3   │    TRANSMISSION MB part  │
        └──────────────────────────┘
                    │
        ┌──────────────────────────┐
   D4   │ DETERMIN. NB PREDICT.E2={P1,,,Pn} │
        └──────────────────────────┘
                    │
        ┌──────────────────────────┐
   D5   │      TRANSMISSION E2     │
        └──────────────────────────┘
                    │
        ┌──────────────────────────┐
   D6   │ ∀1≤i≤n et ∀i+1≤j≤n; Si Pj∈E2 │
        │         Pj - Pi=?        │
        └──────────────────────────┘
                    │
        ┌──────────────────────────┐
   D7   │       T2 (Pj - Pi)=?     │
        └──────────────────────────┘
                    │
        ┌──────────────────────────┐
   D8   │     Q2(T2(Pj - Pi))=?    │
        └──────────────────────────┘
                    │
            ◇ Q2 opt(T2(Pj - Pi))=0? ◇───O───┐
   D9       │ N                              │
        ┌──────────────────────────┐   ┌──────────────┐
        │       Pj ∈E2res          │   │ E2res=E2 - {Pj} │
        └──────────────────────────┘   └──────────────┘
                    │
        ┌──────────────────────────┐
   D10  │        DECISION          │
        └──────────────────────────┘
                    │
        ┌──────────────────────────┐
   D11  │         DECOD.           │
        └──────────────────────────┘
```

# Fig. 8

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060120456 A

- EP 1770639 A

**Littérature non-brevet citée dans la description**

- A fast Mode decision Algorithm for H264/AVC Intra Prédiction. **LING-JIAO PAN.** SIGNAL PROCESSING SYSTEMS. IEEE WORKSHOP, 2007
- **PAN.** A directional field based fast intra mode decision algorithm for H264 video coding. *IEEE International Conference,* 2004

- **G.J. SULLIVAN ; T.WIEGAND.** Rate-distortion optimization for video compression. *IEEE Signal Proc. Mag.,* 1998, 74-90